# EUROPEAN PATENT SPECIFICATION

(11) **EP 2 504 085 B1**
(45) Date of publication and mention of the grant of the patent: **11.01.2017**
(21) Application number: 10757319.8
(22) Date of filing: 09.09.2010
(51) Int. Cl.: B01F 7/00, B01F 15/00, B01F 7/22, A47J 36/06, A47J 36/16, F16D 1/10, A47J 31/44, A47J 47/01, B67D 1/08, E05B 47/00, G07C 9/00, G07F 13/06

(54) **STIRRER, CONTAINER COMPRISING THE STIRRER, METHOD FOR OPERATING THE CONTAINER, DEVICE FOR DISPENSING LIQUIDS AND METHOD FOR OPERATION THEREOF, DEVICE FOR HOLDING LIQUIDS, FOOD PACKAGE THEREOF AND METHOD FOR OPENING ITS LID**
UMRÜHRER, BEHÄLTER MIT DEM UMRÜHRER, VERFAHREN FÜR DEN BETRIEB DES BEHÄLTERS, VORRICHTUNG ZUR AUSGABE VON FLÜSSIGKEITEN UND VERFAHREN FÜR DEN BETRIEB DAFÜR, VORRICHTUNG ZUR AUFNAHME VON FLÜSSIGKEITEN, NAHRUNGSMITTELPACKUNG DAFÜR UND VERFAHREN ZUR DECKELÖFFNUNG DAFÜR
AGITATEUR, RÉCIPIENT COMPRENANT L'AGITATEUR, PROCÉDÉ D'OPERATION DU RÉCIPIENT, DISPOSITIF DE DISTRIBUTION DE LIQUIDES ET SON PROCÉDÉ DE FONCTIONNEMENT, DISPOSITIF POUR CONTENIR DES LIQUIDES ET SON EMBALLAGE ALIMENTAIRE ET PROCÉDÉ POUR OUVRIR SON COUVERCLE

(30) Priority: 09.09.2009 NL 2003460; 09.09.2009 NL 2003461; 09.09.2009 NL 2003462
(43) Date of publication of application: 03.10.2012
(73) Proprietor: Vendinova Group B.V., 5253 RC Nieuwkuijk (NL)
(72) Inventor: SCHILDERS, Wilhelmus, Johannes, Antonius, NL-6006 LW Weert (NL); WIEGERSMA, Frans, NL-5625 NC Eindhoven (NL); BROK, Roberto, Arnoldus, Maria, NL-5151 GK Drunen (NL); BROERE, Gijsbert, NL-5221 LK 's-Hertogenbosch (NL)
(74) Representative: van Oeffelt, Abraham
(86) International application number: PCT/NL2010/050571
(87) International publication number: WO 2011/031144

(56) References cited:
- EP-A1- 0 049 229
- DE-A1- 1 923 863
- FR-A1- 2 877 557
- JP-A- 56 133 019
- US-A- 3 064 950
- US-A- 3 914 956
- US-A- 5 399 014
- US-A- 5 975 751
- US-A1- 2008 223 225

## Description

The present invention relates to a device for dispensing liquids and a method for operation thereof.

Devices for dispensing liquids are per se known. The international patent application WO2006/028375 shows a soup vending machine comprising a liquid reservoir in which a stirrer is situated, and which vending machine is provided with a dispensing unit. The shown construction does however have various drawbacks. The dispensing of liquids and liquid food products incorporating non-liquid parts thus does not take place optimally, the cleaning of the device is a time-consuming affair and the condition and hygiene of the liquid stored in the device are not guaranteed.

The present invention therefore has for its object to at least partially obviate the above stated drawbacks or to provide a usable alternative.

Document US-A-3 914 956 discloses a stirrer in accordance with the preamble of claim 1.

The present invention provides for this purpose a device for dispensing liquids, comprising a liquid reservoir in which a stirrer is received, which stirrer is provided with at least a first stirring blade such as a first stirring screw and at least a second stirring blade such as a second stirring screw, which stirring blades are adapted in mutual co-action to force the liquid in a direction from the first to the second stirring blade during rotation.

In a first embodiment the stirrer in accordance with the features of claim 1 has a first stirring blade rotatable around an axis, and a second stirring blade rotatable around the axis at a distance from the first stirring screw, wherein the first and second stirring blades each extend substantially at right angles from the axis and wherein the stirrer comprises at least one connecting element arranged between the first and second stirring blades at a distance from the axis.

The axis can extend physically here between the first and second stirring blades, although it is also possible for the axis to be interrupted, wherein the stirrer forms a whole due to the presence of the at least one connecting element between the first and second stirring blades. The stirrer preferably takes a symmetrical form and is thus provided with at least two connecting elements.

In an advantageous embodiment the at least one connecting element is provided between the tips of the first and second stirring blades in order to move the liquid optimally along the wall of the reservoir. The stirring blades of the stirrer are preferably dimensioned here such that they extend as far as the wall of a reservoir in which the stirrer is intended to be used, wherein a lower wall of the screw can be located adjacently of an optionally curved surface of the lower wall of the reservoir. Moving the liquid along the side wall of the reservoir is particularly advantageous for cleaning of the reservoir, as will be elucidated hereinbelow, while moving the stirrer along the bottom of the reservoir results in a good circulation of the liquid.

In order to bring about a liquid flow it is advantageous for the connecting element to extend in a plane with at least a directional component transversely of the direction of displacement of the connecting element during the rotation of the stirrer. This can be realized easily in practice in that the connecting element extends in a plane in which the axis of the stirrer also lies. In an embodiment which can be manufactured in particularly advantageous manner the whole stirrer takes a flat form, i.e. the stirring blades also lie in this plane, as can be seen in the following figures. It is noted here that a stirring blade in the sense of the present application is therefore not limited to a spiral or helical element.

In order to provide optimal stirring properties, and particularly distribution of solid parts present in the liquid, at least one of the stirring blades is provided with protrusions.

The blade intended as lower stirring blade can for instance comprise at least one protrusion between the connecting element and the axis and directed toward the upper stirring blade.

Finally, the first embodiment of the stirrer as described above can be provided with coupling means for coupling the stirrer to counter-coupling means of a drive, as elucidated in detail in the description of the following second embodiment of the stirrer.

In a second embodiment the stirrer comprises a shaft provided with at least a first stirring screw and at least a coupling means provided on an outer end of the shaft for releasably coupling the stirrer to a counter-coupling means of a drive device.

Because the stirrer is coupled releasably to a counter-coupling means it can be removed in simple manner from a container in which the counter-coupling means and the drive device are situated, for the purpose of cleaning the stirrer or a container in which the liquid to be stirred is situated. When the counter-coupling means and/or the drive device are situated in a lid of the container, opening of the lid of such a container can hereby also be simplified because the stirrer no longer need be taken out of the container simultaneously with opening of the lid, which can after all involve uncontrolled movements which may result in spilling of the liquid. The stirrer can be embodied with the coupling means on the outer end of the stirrer placed on the upper side during use, and the stirring screw can be situated on the axis at a distance therefrom. This axis can be both a physically present shaft, but must also be seen in this description as mathematical concept, and in this sense need not extend over the whole length of the stirrer. A stirring screw is generally understood to mean any instrument for bringing about a helical rotation, and particularly propeller members, vane members or plate-like members. Liquids such as liquid food products must be understood to mean all pourable media, so also emulsions, suspensions and particularly all forms of soup, including solid parts present therein, such as balls, vermicelli or vegetables.

The coupling means is preferably adapted for coupling to the counter-coupling means unlocked in axial direction and engaging in tangential direction. In this way the coupling in axial direction (so in practice from the top or bottom) can be realized and be released without a force or pressure having to be exerted for this purpose. The stirrer is thereby in fact "releasably connected" to the drive means so that the latter can be removed without the stirrer thereby being removed from the liquid. The engagement in tangential direction logically serves to transmit a driving rotating movement to the stirrer.

In order to transmit this rotating movement, in an advantageous embodiment the coupling means comprises grooves extending in axial direction along the outer end of the shaft for receiving therein protrusions provided on the counter-coupling means. A coupling is in this way provided which engages only in tangential direction and is freely releasable in axial direction. It is logically also possible to apply a mechanical reversal of this coupling means and counter-coupling means.

The at least one stirring screw preferably has a substantially smooth surface so that no liquid or cavities situated therein or spaces enclosed by wall parts can be present therein. The stirring screw preferably comprises two screw blades extending mutually in line, with an opposite angular displacement. It has been found that such screw blades have the least adverse effect on parts present in the liquid. The sharper the parts situated on the surface, the greater the chance of damage to solid parts present in the liquid.

In order to obtain a smooth surface and a hygienic stirring screw, it can be manufactured from ABS. ABS allows a great freedom of design, is temperature-resistant and resilient so that the stirring screw can be mounted in simple manner on the shaft. This shaft is preferably made of stainless steel.

In an advantageous embodiment the stirring screw comprises at least a screw blade lying at an angle of between 30 and 60 degrees, and in particular between 40 and 50 degrees, to a plane perpendicular of the axis. Such an angular displacement, which is relatively large for a stirring screw, already results in a sufficient turbulence at relatively low speeds of several RPM.

In order to further optimize stirring, the shaft comprises a second stirring screw at an axial distance relative to the first stirring screw. The distribution of non-liquid parts in liquids is hereby found to increase considerably. This is because the parts carried upward by the first stirring screw are situated in a liquid flow which is then moved further upward by the second stirring screw.

This effect can be enhanced when the first and the second stirring screws have a relative axial angular displacement around the central axis. This achieves that parts which have left the stream of the first stirring screw, and have thus entered more slowly moving liquid, are entrained by the second stirring screw and are thus lifted to a greater height in the liquid level. If one were to follow a part present in the liquid, it would be possible to observe a substantially S-shaped, ascending path of the part along an imaginary cylinder on the periphery of the stirring screw.

Practice has shown that an axial angular displacement of between 30 and 60, and particularly between 40 and 50 degrees, has a particularly favourable effect, particularly in an application for filled soups.

In order to enable placing of the stirrer in a container for liquids, it can be provided with a spacer. The space ensures that the stirrer can be disposed rotatably at an intended distance from the wall of the container, and for this purpose comprises for instance an element with a length equal to a cross-section of an intended container, the element comprising an eye for passage therethrough of the shaft of the stirrer. By arranging the element in the container the shaft can be arranged at a predetermined position inside the container, for instance a central position, wherein the stirrer is centred such that it (only just) does not touch the walls of the container.

It is further recommended that the outer end of the central shaft remote from the coupling means comprises a pointed or bush shape for supporting the shaft rotatably on a respective bush-shaped or pointed base.

This base is formed here by the container for the liquids, which further comprises a receiving space for the liquid, a lid for closing the receiving space, a counter-coupling means received on a side of the lid facing toward the receiving space for the purpose of engaging the stirrer, and a drive device for driving the counter-coupling means.

In order to simplify placing of the lid, and thereby the engagement of the counter-coupling means on the coupling means of the stirrer, the counter-coupling means can comprise protrusions which taper on a side intended for coupling. This achieves that the coupling means and the counter-coupling means are "self-locating". In order to further enhance coupling the coupling means and the counter-coupling means can be formed from a slightly flexible material so that particularly the protrusions of the coupling means can be moved apart in order to receive the coupling element.

The self-locating effect is particularly advantageous when the lid is pivotally connected on a peripheral side thereof to the container. The coupling means can then lie at a small angle to each other during mutual engagement, this angle otherwise preferably disappearing in a wholly coupled situation.

When the lid is of the pivoting type, it is advantageous that it has a stepped cross-section on a side directed toward the receiving space. Condensed water deposited on the inside is hereby carried back into the container when the lid is opened, wherein the lid will lie "obliquely" relative to an opening in the container. The liquid hereby retains its intended viscosity and does not thicken, which would occur if condensed water were to be extracted from the liquid and discharged from the container. In addition, dripping of condensed water outside the device is in this way prevented. The stepped form is oriented here such that the lid "increases in thickness" in a direction from its outer side toward its inner side. The stepped form need not however be symmetrical but can consist of annular, oval or elliptical elevations which need not be arranged centrally on the lid.

In an advantageous embodiment the lid also comprises the drive for the stirrer. This provides the advantage that the underside of the container is free of "obstacles" and can for instance be provided with a dispensing device. This also avoids the risk of possible liquid leakage resulting in electrical short-circuiting in lower-lying parts. Finally, the drive is in this way easily accessible for maintenance.

In an advantageous embodiment the container is provided with a control unit for controlling the drive, which can be adapted to operate the drive in a stirring mode, in which the drive has a rotation speed within a first range, or in a cleaning mode, in which the drive has a rotation speed within a second range. The second range will generally be higher here than the first range. Values which have been found advantageous are between 0 and 10 RPM (depending on the liquid to be stirred) and preferably about 5 RPM for the stirring mode, and between 20 and 500 RPM, and particularly around 50 and around 350 RPM, for the cleaning mode. The control unit can be adapted here to alternate the rotation direction of the drive.

The container and/or the lid can also be provided with heating means which can heat the liquid or hold it at a temperature, and can also bring a cleaning liquid, which can in principle be water, to a suitable temperature. A kettle can be present particularly for this purpose.

Further disclosed is a device for dispensing liquids with a dispensing unit for dispensing portions of liquid from a reservoir, which dispensing unit comprises a receiving opening for the liquid which is connected to the interior of an impeller housing, an outlet opening connected to the interior of the impeller housing; and a drivable impeller for carrying the liquid in controlled manner from the receiving opening to the outlet opening, provided with a coupling means accessible from an outer side of the impeller housing for coupling the impeller to a drive, wherein the impeller housing comprises a substantially cylindrical cavity for a substantially blade wheel-like, at least partially flexible impeller, wherein a diameter of the cavity is smaller over a part of the periphery than the diameter of the impeller. In a clockwise rotating impeller the smaller diameter is for instance situated on the right-hand side, wherein the left-hand side has an only slightly smaller diameter than the impeller. During clockwise rotation the volume is hereby reduced from the outflow opening, whereby a suction action occurs during passage along the inflow opening. The liquid is hereby as it were drawn into the blades of the impeller. When passing along the outflow opening the liquid is pressed out of the impeller, on the one hand by gravitational force and on the other by the pressure of the spaces between the blades of the impeller becoming smaller.

Further disclosed is a device for dispensing liquids with a dispensing unit for dispensing portions of liquid from a reservoir, which dispensing unit comprises a receiving opening for the liquid which is adapted for releasable coupling to the reservoir.

Owing to the releasable coupling to the reservoir the dispensing unit can be removed quickly from the liquid reservoir, whereby maintenance and/or replacement can take place in simple manner. The assembly of devices for dispensing liquids provided with such a dispensing unit can also take place at a higher speed owing to such a releasable coupling.

In an embodiment the receiving opening is adapted for coupling to the liquid reservoir by means of a rapid-action coupling, such as a bayonet closure or a snap connection. This type of connection has been found to be reliable and able to bring about a leakage-free coupling. In the case of a bayonet closure this closure can comprise a ring rotatably connected to the dispensing unit and having inward directed protrusions for engaging a counter-bayonet closure connected to the liquid reservoir. The ring can be provided with handles extending in radial direction from the ring in order to increase the convenience of use during mounting and removal thereof.

The coupling means for coupling the impeller to a drive device is preferably adapted to couple and uncouple the impeller to and from the drive in one smooth movement. The impeller can thus be removed in simple manner for replacement, cleaning or inspection, or the whole dispensing unit can be removed in simple manner for the same purposes after release of the coupling to the liquid reservoir.

In a practical embodiment the coupling means for coupling the impeller to a drive device can comprise a bush for receiving a drivable shaft therein (or vice versa, wherein the impeller comprises a shaft which can be received in a bush of a drive), wherein the shaft and the bush are provided with means for providing grip in tangential direction of the shaft. This achieves that the impeller or the whole dispensing unit can be released by displacement of the shaft and/or bush in axial direction.

In order to create some freedom of movement and tolerance during coupling and uncoupling of the impeller and the drive, the drivable shaft can comprise a flexible homokinetic coupling for aligning the shaft and the impeller during coupling.

In a further advantageous embodiment the outer side of the impeller housing is substantially bush-like. It hereby takes up a minimum of space in the housing of a device for dispensing liquids in which it is received, such as a soup dispensing machine, while the prior art impeller housings are substantially cube-shaped and thus take up a relatively large amount of space in such a device for dispensing liquids and make maintenance of parts placed behind the impeller housing more difficult.

The substantially bush shape preferably has a maximum wall thickness of between 2 and 20, and in particular between 5 and 15 mm. The wall thickness can be equal along the whole periphery of the bush, or vary, for instance such that the outer side of the impeller housing has a substantially round cross-section.

This impeller housing preferably has at least one releasable wall part, such as a front or rear wall, with the removal of which the cavity of the impeller is accessible. Maintenance and replacement operations can in this way be carried out quickly and efficiently. The wall part is preferably directed toward a side of the device for dispensing liquids in which the dispensing unit is received such that opening of the device for dispensing liquids provides easy access to the wall part.

In order to enable rapid removal of the wall part the dispensing unit can comprise a pulley puller or a similar closure, such as a clamp or clip, for holding in place or releasing the at least one releasable wall part. A plurality of wall parts, such a front and a rear wall, can however be held simultaneously with this closure.

In order to further simplify the maintenance, and particularly the assembly and disassembly, of the dispensing unit, it can be provided with displacing and particularly tilting means for displaceably or tiltably receiving the dispensing unit in a device for dispensing liquids such that the receiving opening of the reservoir can be moved away from and toward the reservoir when the coupling to the reservoir is unlocked.

In the case of tilting means it is advantageous for a tilting axis around which the tilting means tilt the dispensing unit to lie perpendicularly of a rotation axis of the impeller, and to lie perpendicularly of at least a through-flow direction through the receiving opening or the outlet opening. Once the coupling to the liquid reservoir has been released, the dispensing unit can in this way be tilted downward and then be taken out of a device for dispensing liquids in which it is received, or be serviced in the tilted position. The tilting means can for instance comprise a lever or rocker device, which can be provided with drive means for the tilting movement. A translating device can also be provided, with which the dispensing unit can be displaced downward.

It is possible to apply a physical tilting shaft, although in an advantageous embodiment the impeller is suspended in the device by means of a leaf spring. In a rest position such a spring, which can for instance be V-shaped, holds the impeller in its operative position, from which it can be moved by means of torsion of the spring. Not only is this construction simple and robust, it also takes up little space in the housing of the device and is usually lighter in weight compared to a pivoting suspension.

In a subsequent embodiment the device comprises a liquid reservoir, a lid for closing the liquid reservoir and a lock for locking the lid on the liquid reservoir, wherein the lock is adapted to unlock the lid and the reservoir using only at least a key.

Unauthorized opening of the lid is hereby made difficult, if not impossible, so that unauthorized addition or removal of liquids to or from the reservoir is no longer possible. In this way the quality and the quantity of the liquid present in the reservoir can also be monitored.

In an embodiment the lock is adapted to lock the lid and the liquid reservoir in a preferred situation. This means that the lock is normally closed, unless it is opened via the key, and after closing of the lid is locked again until the subsequent use of a key. This embodiment is particularly advantageous when use is made of a non-mechanical lock, which can only be unlocked by means of (for instance electronic) actuation. This prevents the lid being opened unintentionally by closing off the electricity supply to the device.

A non-exclusive list of possibly applicable keys comprises the group of: a mechanical key, an optical key such as a barcode, a logical key such as a code, an electronic key such as a chip code, or a magnetic key. Such keys can be applied separately or in combination, for instance a barcode (optical key) or magnetic code (magnetic key) together with a pin code (logical key).

The use of an electrically controllable lock is advantageous since such a lock requires no interaction with a user, is therefore hygienic and less susceptible to damage through incorrect use, and can also be controlled in automated manner.

It is particularly advantageous when a rigid locking is applied, i.e. a lock without parts which move relative to each other, such as an electromagnetic lock. Not only is such a lock extremely insensitive to incorrect use, it also does not require any maintenance and in particular does not comprise any parts which have to be lubricated or which are susceptible to wear and which can compromise hygiene, this being particularly desirable in use of the vending machine for liquids intended as food products, such as soups. When a permanent magnet is used an electromagnetic lock can be adapted such that the closure normally locks as soon as the lid and the reservoir are brought into mutual contact, and can only be unlocked again by applying a voltage to an electromagnet counteracting the permanent magnet. Hereby is also achieved that the lock can also withstand switch-off or failure of a supply voltage for the device in which it is incorporated, this making unintended opening of the lid even more difficult.

Such a lock is preferably provided with control means such as a microprocessor, with which the lock can be operated in simple manner under predetermined conditions and requirements and whereby a variety of keys can also be used, since the readers for these keys are usually also adapted for co-action with a microprocessor. Readers for barcode, magnetic strip and logical codes are particularly suitable for coupling to such a processor.

The control means are therefore preferably also adapted to read an identification means of a user before unlocking the lock. In this manner the number of users able to unlock the device can be readily monitored and opening of the lid can be reserved for authorized and competent staff.

Optionally in combination with the reading of an identification means of a user, the control means can be adapted to read an identification means of a filling for the liquid reservoir, such as a packaged food product provided with a suitable key.

It is hereby possible to monitor whether the filling to be added to the device is suitable and for instance complies with a best before-date given in the identification means, and conditions for holding the filling in the reservoir can also be derived, such as - in the example of a soup - a quantity of water to be added, a temperature and/or a stirring speed or frequency. It is also possible to determine that, when the device has been used for a time for a first filling, a cleaning program must first be run before a new (same or different) filling is added.

The control means can also be adapted to store read data so that it is possible to keep track of which and which quantity of filling has already been applied, and so that maintenance of the device and stock control can be adjusted hereto. These control means can also be adapted to exchange the stored data, wherein it is possible to communicate to a central database which fillings have been applied, and also the extent to which these fillings have been dispensed to final users. For this purpose data of a dispensing unit provided on the device can also be tracked and stored.

The invention will now be elucidated with reference to the following non-limitative figures, and in which:
- Figure 1 shows an overview of a container with a stirrer;
- Figure 2a shows a first embodiment of a stirrer according to the present invention;
- Figure 2b shows a second embodiment of a stirrer;
- Figure 2c shows a kettle and cleaning agent feed;
- Figures 3a and 3b show in detail a coupling between the stirrer and a drive for the stirrer;
- Figure 4 shows in detail a lid for the container;
- Figure 5 shows several views of a stirrer;
- Figures 6a and 6b show a dispensing unit;
- Figure 7 shows a part of a releasable coupling;
- Figure 8 shows a cross-section of tilting means;
- Figure 9a shows a perspective view of a first embodiment of the tilting means;
- Figure 9b shows a perspective view of a second embodiment of the tilting means;
- Figure 10 shows a perspective view of a device for dispensing liquids, provided with a dispensing device;
- Figure 11 shows a perspective detail view of a liquid reservoir with lid, provided with a lock;
- Figure 12 shows a first flow diagram of a method for opening a lid of a liquid reservoir with a lock;
- Figure 13 shows a second flow diagram of a method for opening a lid of a liquid reservoir with a lock;
- Figure 14 shows a third flow diagram of a method for opening a lid of a liquid reservoir with a lock; and
- Figure 15 shows a table with steps for cleaning the device.

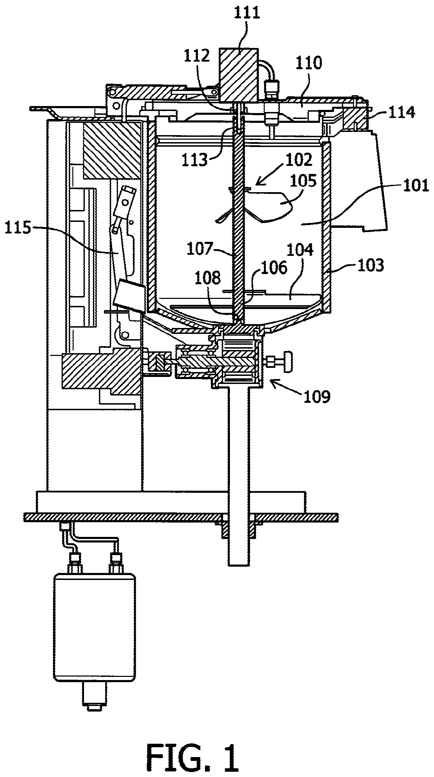

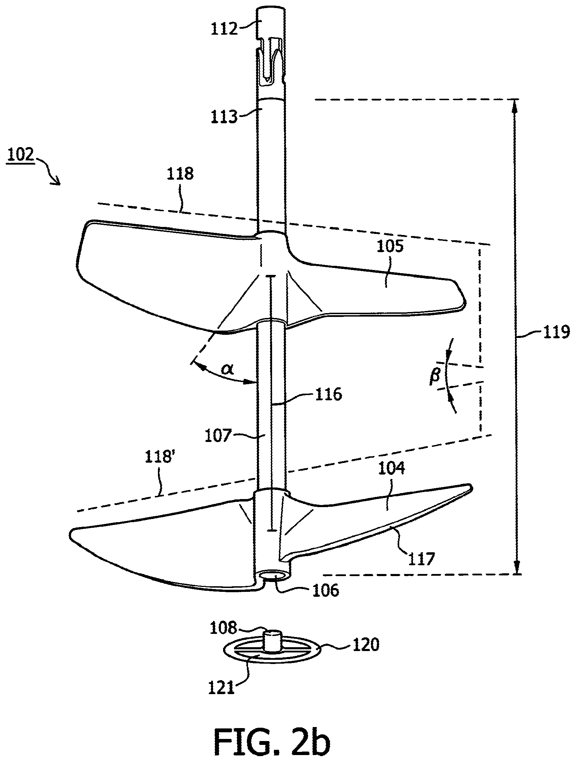

Figure 1 shows an overview of a container 101 with a second embodiment of a stirrer 102 not forming part of the present invention as elucidated hereinbelow with reference to figure 2b. Container 101 can also be equipped with a stirrer according to the first embodiment of the present invention. Container 101 has a wall with which stirring screws 104 and 105 of stirrer 102 make substantially form-fitting connection. In the shown embodiment there is a very small intermediate space of about 2 mm between the inner side of wall 103 and the tips of stirring screws 104 and 105. On an underside 106 of its shaft 107 the stirrer is provided with a bush 106 which is bearing-mounted on a pin 108 provided on the bottom of the container, more particularly in the centre of a discharge opening for the liquid to a dispensing unit 109 provided at the bottom of the container. The container is also provided with a lid 110 which comprises on a side remote from the container a drive 111 connected to a counter-coupling means 112 which is provided on the side of lid 110 facing toward the container and which is adapted to engage coupling means 113 of stirrer 102. The container also comprises a controllable magnetic closure for opening and closing the lid, and a tilting device 115 for tilting dispensing unit 119 relative to container 111 for maintenance and assembly applications.

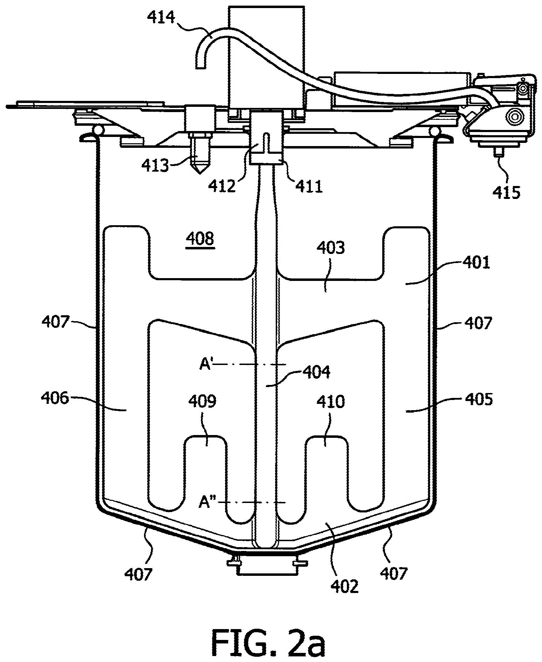

Figure 2a shows a first embodiment of a stirrer 401 according to the present invention, which stirrer is provided with a first stirring blade 402 rotatable around a shaft 404 and a second stirring blade 403 rotatable around the shaft at a distance from the first stirring screw, wherein the first and second stirring blades each extend substantially at right angles from the shaft and wherein the stirrer comprises two connecting elements 405, 406 arranged at a distance from the shaft between first and second stirring blades 402, 403.

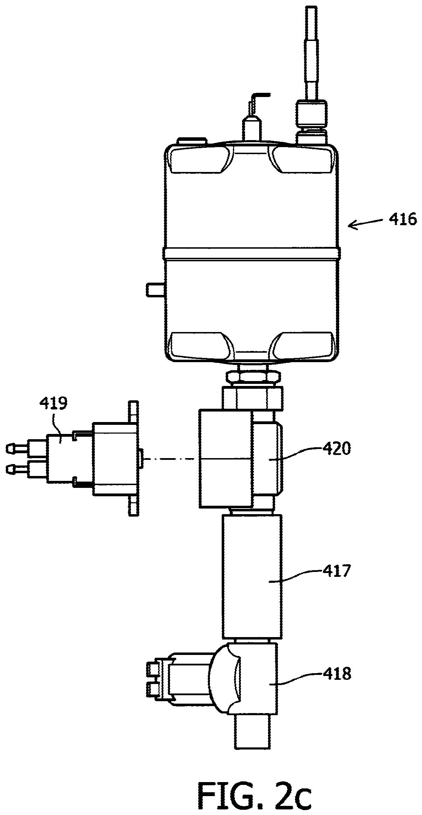

Shaft 404 here extends physically between the first and second stirring blades, although it is also possible for the shaft to be interrupted in the interval A'-A". Connecting elements 405, 406 are provided between the tips of first and second stirring blades 402, 403 in order to move the liquid optimally along wall 407 of reservoir 408. Stirring blades 402, 403 of the stirrer are dimensioned here such that they extend as far as wall 407 of a reservoir 408 in which the stirrer is intended to be used, wherein a lower wall of first stirring blade 402 can lie adjacently of an optionally curved surface of the lower wall of the reservoir. Moving the liquid along the side wall of the reservoir is particularly advantageous for the purpose of cleaning the reservoir, while moving stirrer 401 along the bottom of the reservoir results in a good circulation of the liquid, in this case for instance soup. In the shown embodiment the whole stirrer 401 takes a substantially plane form, i.e. stirring blades 402, 403 also lie in this plane. In order to provide optimal stirring properties, and particularly to distribute solid parts present in the liquid, the first stirring blade 402 is provided with protrusions 409,410. Stirrer 401 is also provided with a coupling means 411 for coupling stirrer 401 to a counter-coupling means 412 connected to a drive. Also shown is a spray device 413 with which a cleaning liquid, such as water and/or cleaning agent, obtained via feed 414 and via coupling 415, can be supplied as shown in figure 2c.

Figure 2b shows a stirrer 102 not forming part of the present invention. The stirrer for liquids such as liquid food products comprises a shaft 107 provided with a first stirring screw 104 and a second stirring screw 105 which are placed at a mutual distance 116 of 204 mm. First stirring screw 104 is placed on an underside of shaft 107 to enable stirring closely along the bottom of a container. The side 117 intended as underside of stirring screw 104 during use is therefore formed in accordance with a cross-section of an intended container, in this non-limitative example a container with a concave underside. The stirrer also comprises a coupling means 113 provided on an outer end of the shaft for releasable coupling of stirrer 102 to a counter-coupling means 112 of a drive device in order to arrange this stirrer for rotation around its axis 107. The blades of first stirring screw 104 and second stirring screw 105 have a rotation on axis 107 relative to a perpendicular plane, which is 45 degrees in the shown embodiment. The two blades of a stirrer thus form an angle of 190 degrees relative to each other. First stirring screw 104 and second stirring screw 105 have respective longitudinal axes 117 and 118 situated at an angle relative to each other. In the shown non-limitative embodiment the angle amounts to 48 degrees. Experiments have shown that an angle of about 48 degrees, i.e. an angle between 40 and 55 degrees, at a rotation speed of around 5 RPM, produces surprisingly favourable stirring properties during stirring of a filled soup.

At an outer end intended as underside during use the stirrer 102 is provided with a bush form 106 which can be formed tapering slightly toward its outer end for the purpose of placing on a cylindrical pin 108 which may be present on the bottom of a container. Such a pin 108 can however be formed with a sharp point for the same purpose. In the shown embodiment pin 108 is provided on a grate 120 which forms a discharge opening 121 to a dispensing member of the container.

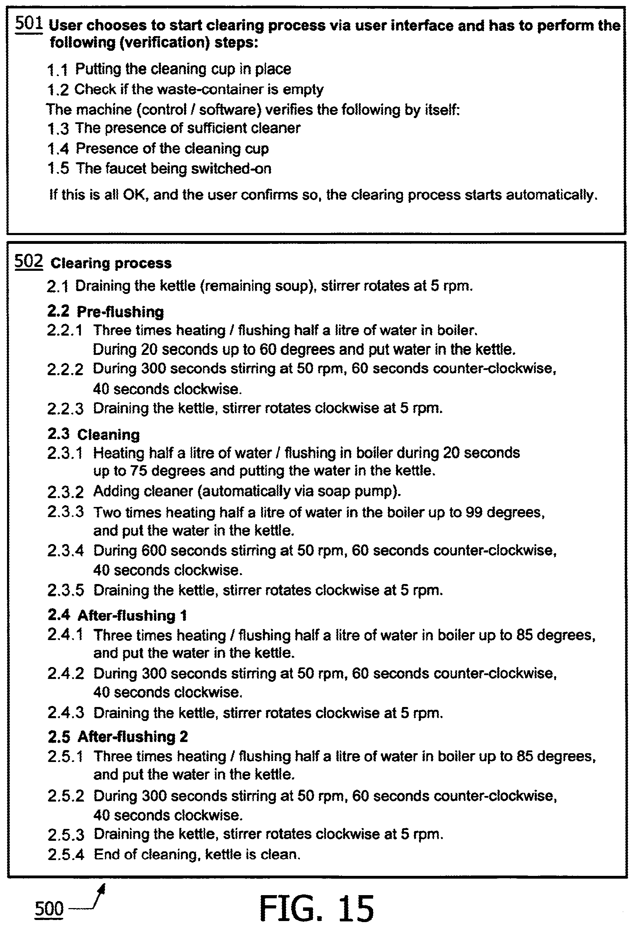

Figure 2c shows a kettle 416 for providing hot water for the purpose of automated cleaning of the device as according to the steps shown in figure 15. The kettle has a capacity of about 0.5 litre of water and is used several times in quick or even immediate succession to heat water. In this way a volume of the reservoir can be filled within several seconds with for instance a litre and a half of water at a temperature of for instance 75 degrees Celsius. Kettle 416 is coupled to a non-return valve 417 to prevent water running back from the device into the conduit, and a water valve 418. A soap pump 419 can also be mounted via coupling 420.

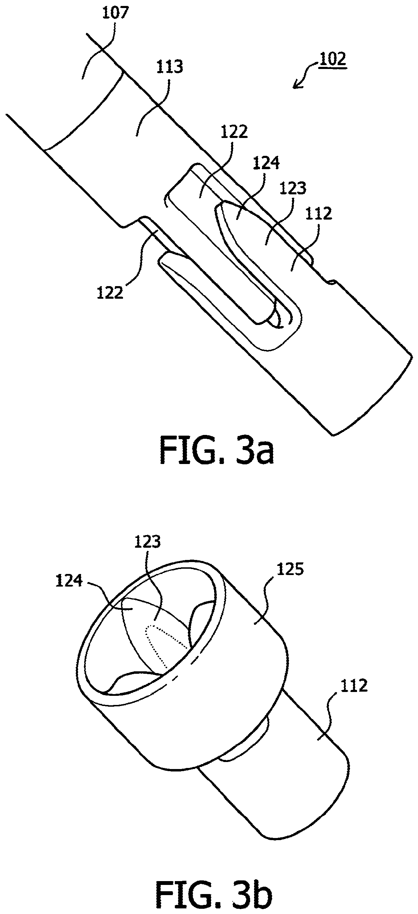

Figure 3a shows in detail a coupling between stirrer 102 and a counter-coupling part 112 of a drive for the stirrer. Coupling means 113 comprises grooves 122 extending in axial direction along the outer end of the shaft for receiving therein protrusions 123 which are provided on the counter-coupling means and which are provided with tapering outer ends 124. Figure 3b shows an alternative embodiment of the counter-coupling means, wherein protrusions 123 are enclosed by a washer 125 which increases the robustness of the counter-coupling means.

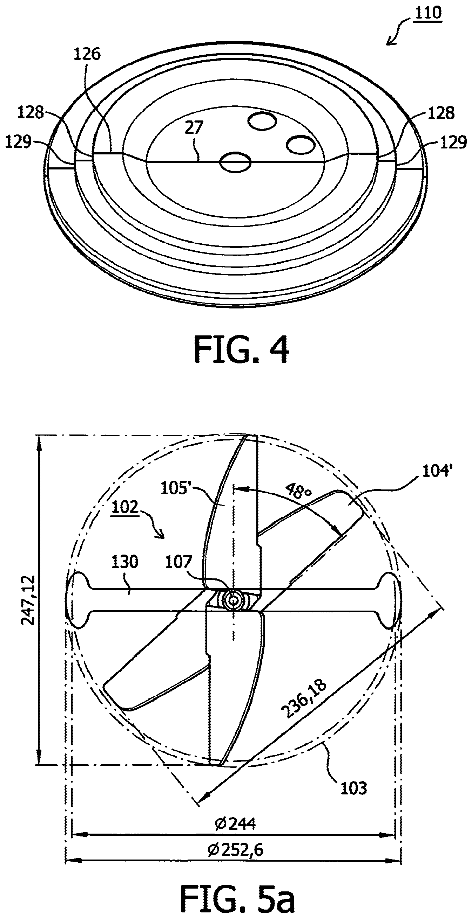

Figure 4 shows in detail a lid 110 for a container disclosed herein.

Figure 4 shows particularly a side of lid 110 directed toward the container. The side of lid 110 directed toward the receiving space has an at least partially stepped cross-section 126, in the centre of which a recess 127 is arranged. When the lid is placed in an opened - oblique - orientation, condensed water tends to fall back at locations 128 and 129 into the container present under the lid.

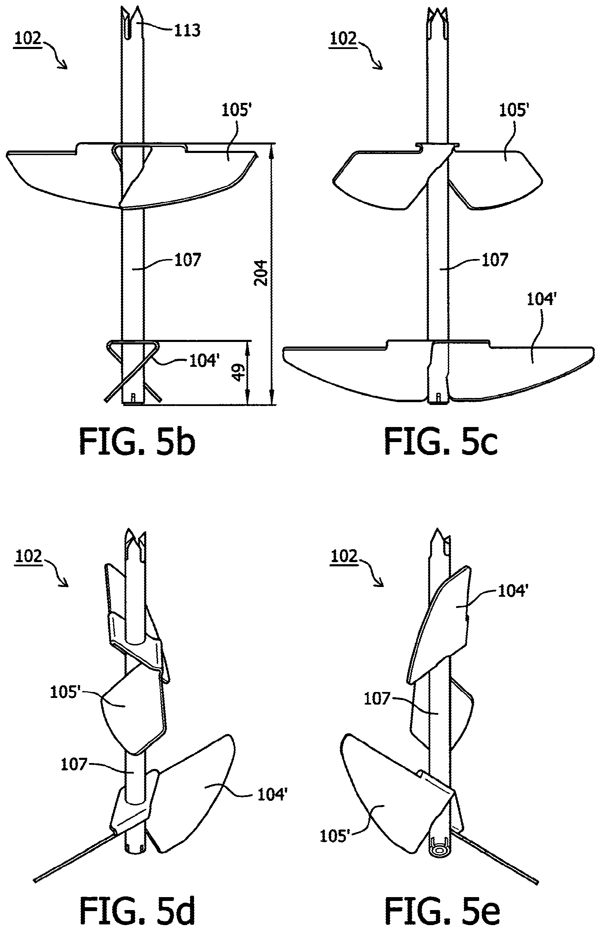

Finally, figures 5a-5c show various views and dimensioning of alternative embodiments of stirrer 2 not forming part of the present invention, wherein stirring screws 4' and 5' are formed from plate metal. Shown particularly in the top view of figure 5a is a spacer 130 for centring axis 107 relative to an inner side of a wall 103 of a container. Spacer 130 can for instance be formed from metal wire, but can also comprise a plastic - such as ABS - sheet. On an inner side of its wall 103 the container can comprise a groove or other clamping means for locking spacer 130 parallel to the axial direction of axis 107, although stirrer 102 can also be provided, for instance on its axis 107, with means for fixing spacer 130 at a fixed position along the axis.

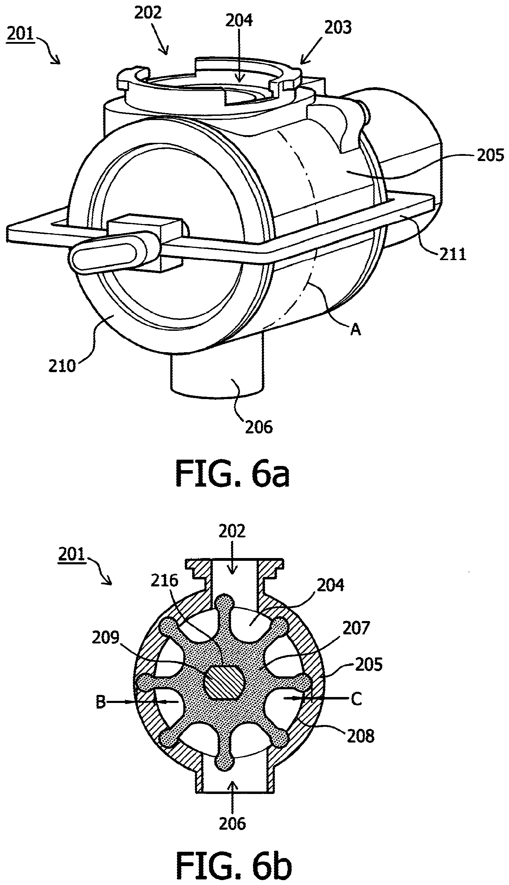

Figure 6a shows a dispensing unit 201 not forming part of the present invention for dispensing portions of liquid from a liquid reservoir (not shown). Dispensing unit 201 comprises a receiving opening 202 for liquid, adapted 203 for releasable coupling to the liquid reservoir and connected to the interior 204 of an impeller housing 205. The dispensing unit is also provided with an outlet opening 206 which is likewise connected to interior 204 of impeller housing 205. Situated in the housing is a drivable impeller (see figure 6b) for carrying the liquid in controlled manner from receiving opening 202 to outlet opening 206, which impeller is provided with a coupling means accessible from an outer side of impeller housing 205 (not shown) for the purpose of coupling impeller 207 to a drive (not shown). Impeller housing 205 is provided with a releasable wall part 210 which in the shown embodiment faces toward a front side of a soup vending machine and is held in place by a pulley puller 211 likewise accessible from the front side of the soup vending machine.

Figure 6b shows a cross-section of dispensing unit 201 of figure 6a in cross-section along the line A shown in figure 6a. Visible is the blade wheel-like impeller 207, which is manufactured at least partially from a flexible material such as rubber and is shown schematically in the shape it would have if it were not situated in housing 205. It can be seen that the substantially cylindrical cavity in which the impeller is situated has an inner wall 208 with a smaller diameter than a diameter of the impeller in a non-clamped position. Impeller 207 hereby clamps with a bias in the substantially cylindrical cavity of impeller housing 205, which results in a liquid-tight closure. It can be seen that the radius of inner wall 208 of impeller housing 205 varies, whereby the impeller is pressed further in at location B than at location C during rotation thereof about shaft 209. During clockwise rotation the volume between the blades is hereby reduced from outflow opening 206, whereby a suction action occurs during passage along inflow opening 202. The liquid is hereby as it were drawn into the blades of impeller 207. As it passes outflow opening 6 the liquid is pressed out of the impeller, on the one hand by gravitational force and on the other by the pressure of the spaces becoming smaller.

The liquid transported by the impeller, with the solid parts received therein such as, in the case of soup, vegetables, vermicelli or balls, is held enclosed during feed from receiving opening 203 to outlet opening 206 and released again at the position of outlet opening 206. It can further be seen that shaft 209 is provided with flattened sides for the purpose of providing grip in tangential direction of shaft 209.

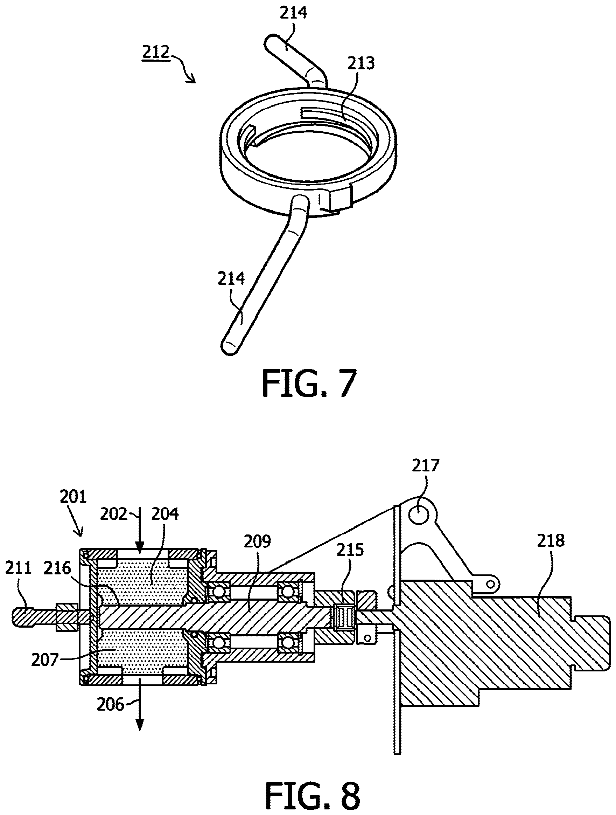

Figure 7 shows a part 212 of a rapid-action coupling which, together with protrusions 203 of the dispensing unit shown in figure 6a, forms a bayonet closure for coupling dispensing unit 201 to a reservoir of a device for dispensing liquids, such as a soup vending machine (not shown). The rapid-action coupling is adapted for mounting on the liquid reservoir and comprises a screw thread for engaging the protrusions 203 on the dispensing unit. The coupling of dispensing unit 1 and the reservoir can be effected and released again quickly and easily by means of handles 214.

Figure 8 shows the dispensing unit of figures 6a and 6b in a longitudinal section. The dispensing unit is coupled to a drive 218 by means of a central shaft 9 extending into a bush-shaped recess 216 in impeller 207 of the dispensing unit. A homokinetic coupling 215 provided with a coupling piece covered with rubber is received in central shaft 209 for a low-noise force transmission which allows an angular displacement or bend in the length of central shaft 209. Such a coupling facilitates coupling of dispensing unit 201 to a drive 218. The assembly of the dispensing unit and the drive can be tilted around a tilting point 217 in order to facilitate release of dispensing unit 201 once the coupling of receiving opening 202 to the reservoir (not shown) has been released.

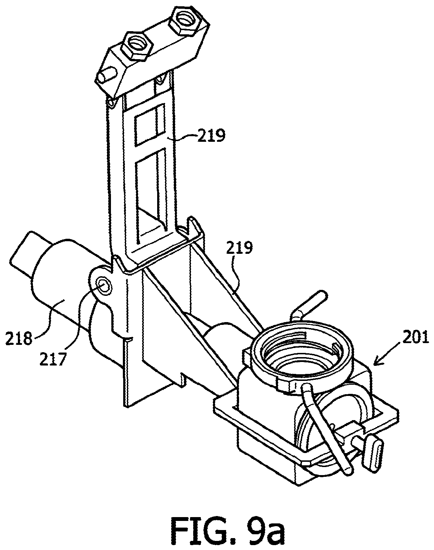

Figure 9a shows a perspective view of dispensing unit 201 coupled to the drive, as well as tilting means 219 with which dispensing unit 201 can be tilted around a tilting point 217. Tilting means 219 can be provided with a piston ring (not shown) for simplifying the tilting of the dispensing unit and the drive. Also shown is part 212 of the rapid-action coupling for coupling dispensing unit 201 to an opening of a reservoir.

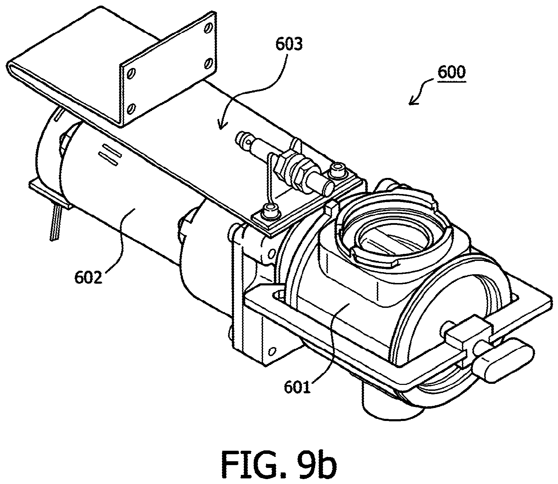

Figure 9b shows an alternative embodiment 600 of a device not forming part of the present invention, wherein a dispensing unit 601 and a drive 602 for an impeller thereof are suspended in the device by means of a spring 603. Spring 603 is a leaf spring with a V-shape, which has the advantage that a relatively great movement of the dispensing device can be made while the suspension by means of spring 603 takes up relatively little space.

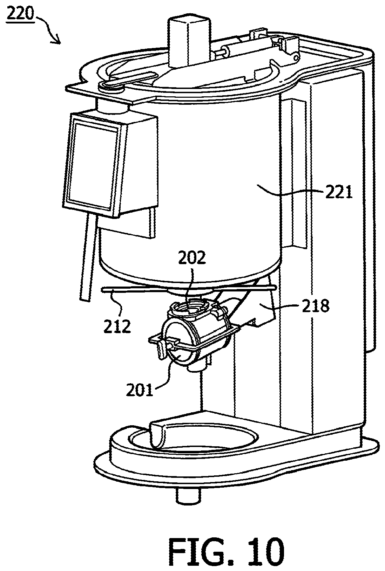

Figure 10 shows a perspective view of a soup vending machine 220 provided with a dispensing unit 201 not forming part of the present invention in a tilted position, wherein part 212 of the rapid-action coupling is mounted on the opening of reservoir 221 for the liquid. A part of a front plating of soup vending machine 220, which in a situation of use is located in front of front side 210 of the dispensing unit, is not shown for the sake of clarity. The dispensing unit is situated in a tilted position, wherein receiving opening 202 is not connected to an opening of reservoir 221.

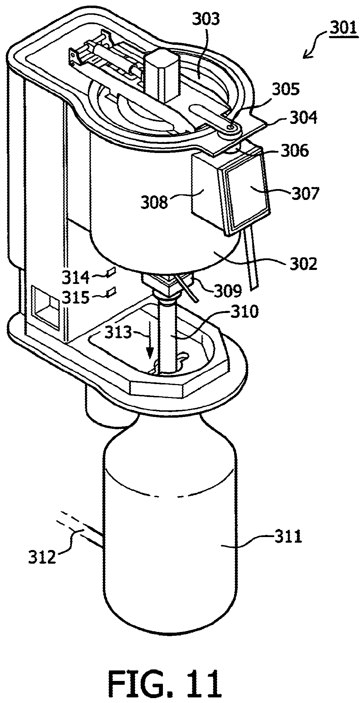

Figure 11 shows a soup vending machine 301 comprising a liquid reservoir 302 provided with a lid 303 for closing liquid reservoir 302 and a lock 304 for locking lid 303 to liquid reservoir 302. The lock comprises a first locking part 305 which is connected to lid 303 and comprises a permanent magnet, as well as a second locking part 306 which is connected to the liquid reservoir and comprises ferromagnetic material and an energizable electromagnet. It is noted that the distribution of electromagnet, permanent magnet and ferromagnetic material can take place in different ways over first locking part 305 and second locking part 306, wherein all distributions are deemed to fall within the present invention. The electromagnet is coupled to a control means in the form of a microprocessor unit 307, which is provided with an interface 308 which may comprise a (touch) screen 308, as well as a reader (not shown) for a key in the form of a barcode reader and/or a magnetic strip reader. Lock 304 is adapted to unlock lid 303 and reservoir 302 using only at least a key read by the reader. Screen 308 can also serve as keyboard for entering instructions or keys in the form of codes or keystrokes, which can serve to open the lid but also to dispense the liquid present in the reservoir by means of dispensing unit 309, which can likewise be controlled by control unit 307. In the shown view a flush pipe 310 is also present, which is folded away during normal use and which extends from dispensing unit 309 to an optional discharge reservoir 311 which is shielded in a practical setup and which can comprise a further discharge 312 for discharging redundant liquid and/or flushing water. Flush pipe 310 can however be connected directly to a discharge. During normal operation, wherein device 301 serves to dispense liquid in a broad sense, for instance soup, the flush pipe can be folded away in the direction of arrow 313, wherein liquid can be dispensed into containers such as cups or mugs placed under dispensing unit 309. Device 301 is provided with a number of sensors 314, 315 placed one above the other for detecting the height of a placed container and, using the control means, adjusting thereto the quantity of liquid to be dispensed to the placed container. The control means can also be connected to a payment device when the liquid must only be dispensed on the basis of for instance coin insertion or a card swipe. Such a payment device or other dispensing limitation can however be integrated into the control means, which can determine for instance via interface 308 or a reader for keys connected thereto whether a user of device 301 has a sufficient balance or credit on a payment means to dispense the liquid.

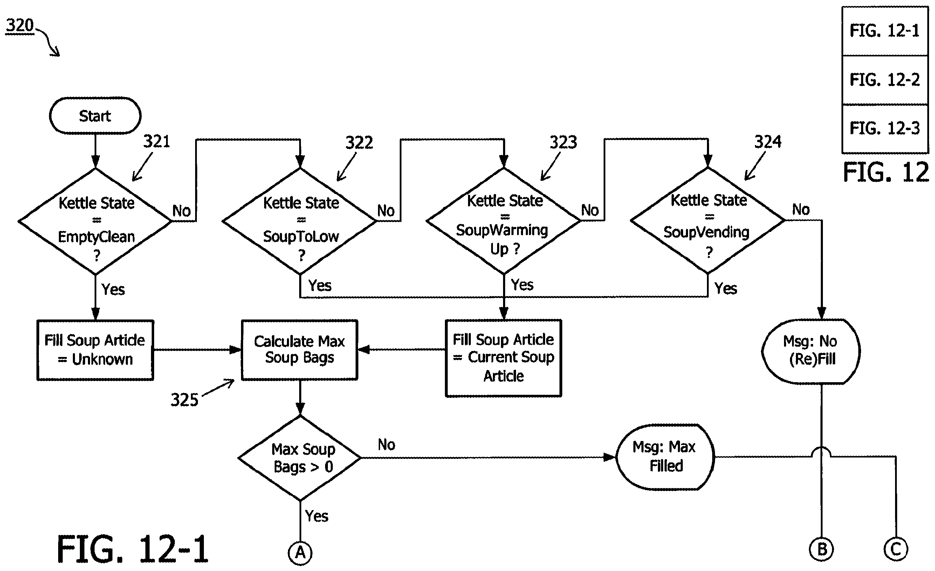

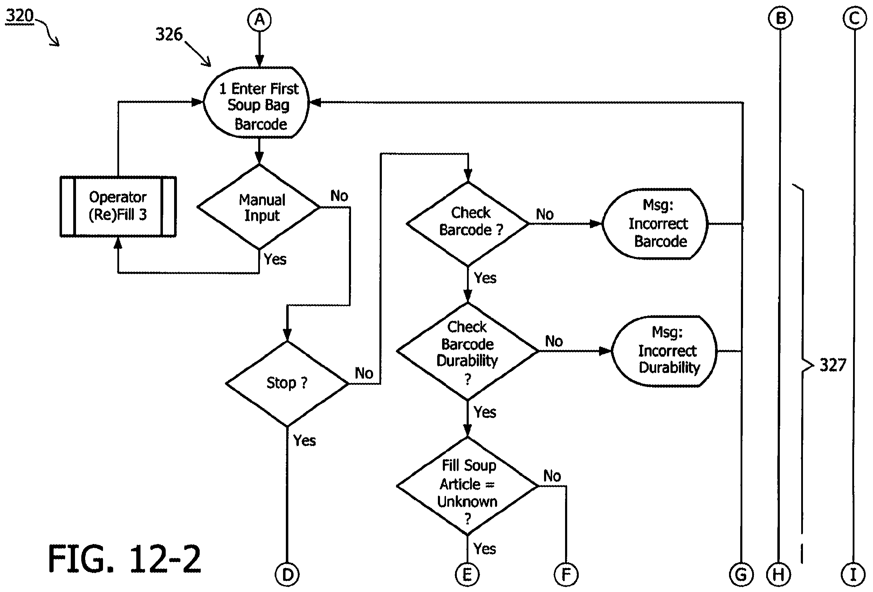

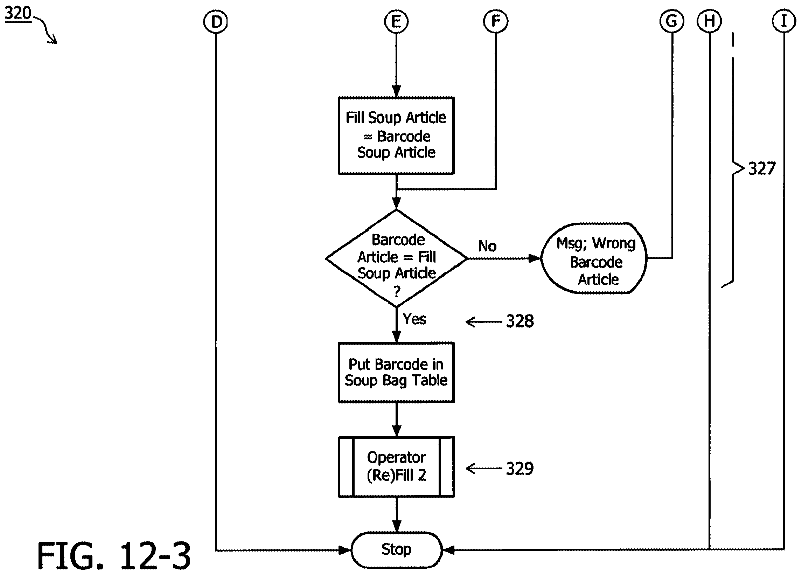

Figure 12 shows a first flow diagram 320 for adding a liquid to the liquid reservoir of a device disclosed herein. The diagram shows a number of decision criteria 321-324 for determining whether liquid can be added to the reservoir in the present situation of the device. If this is the case, a calculation is made 325 as to how much liquid - in this case packages filled with soup - can be added to the reservoir. When this has been determined a key is read 326 of a package filled with soup, wherein it is established 327 by the control means whether the data relating to the storage life and/or conditioning of the filling included in the key present on the package, formed by a barcode, can be accepted 328, after which the lock is unlocked 329 by the control means so that an operator can arrange the filling in the reservoir and can then close the reservoir again.

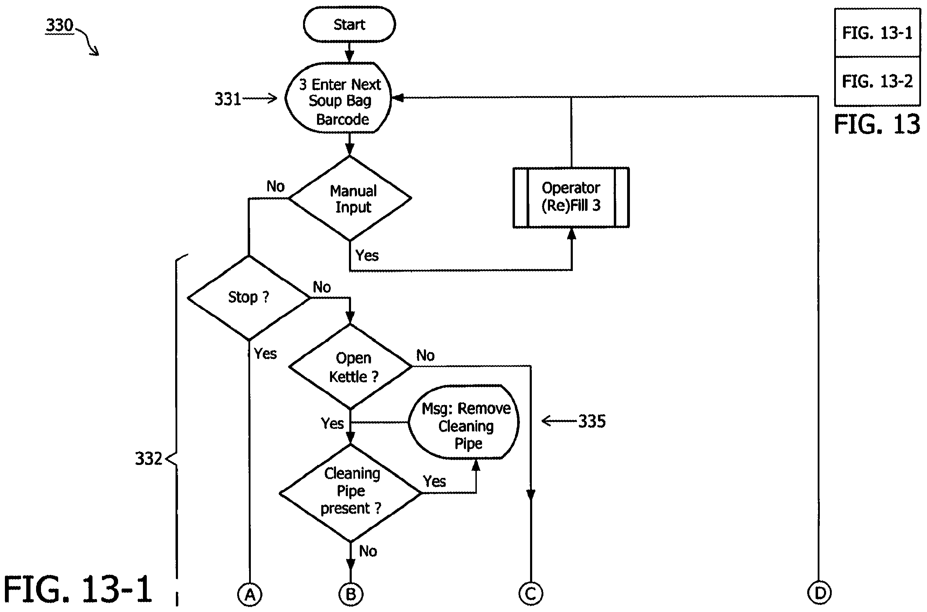

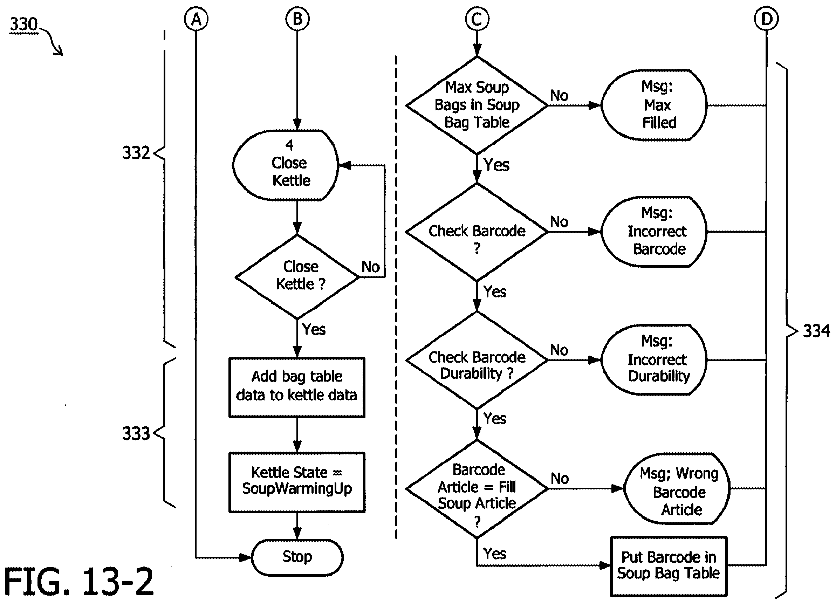

Figure 13 shows a second flow diagram for filling of the reservoir of a device disclosed herein by an operator. The figure shows how the control means determine 331 whether a liquid can be arranged in the reservoir and, if so, whether it is first necessary to run through a cleaning cycle 332, wherein the operator can receive instructions 335, such as the placing of a flush pipe, via an interface on the device. When the control means have determined 334 that liquid can be added, in the shown embodiment soup, a key of the package of the liquid is read and also stored 333 by the control means, after which the lock is unlocked and a dispensing mode is automatically initiated after filling of the reservoir.

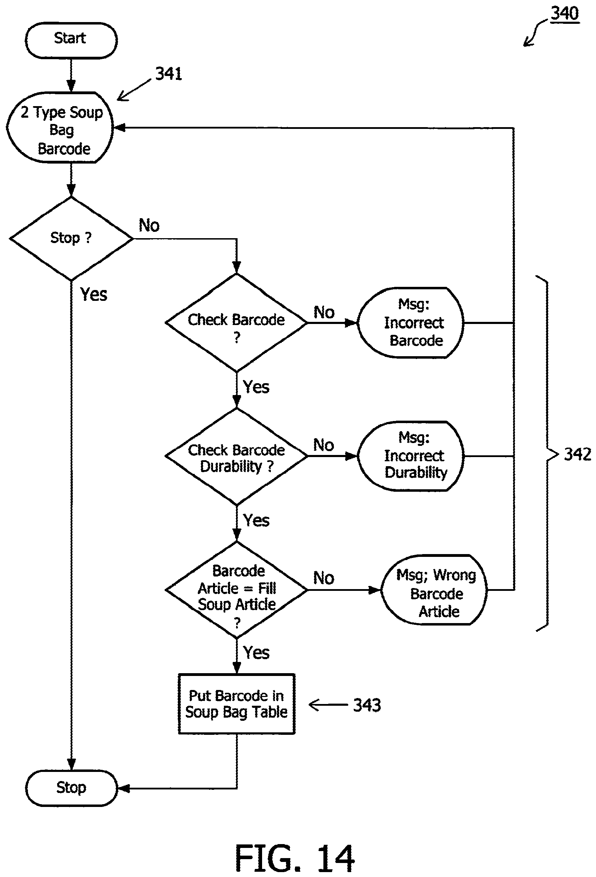

Figure 14 shows a third flow diagram for opening a lid of a liquid reservoir with a lock disclosed herein, wherein the control device detects 341 that an attempt is being made to place in the reservoir a filling differing from a previously stored filling, after which the control means determine 342 that the content of the package is not suitable for placing and inform an operator hereof by means of messages via an interface of the device. As soon as an attempt is made to add a suitable filling, the lock is unlocked and the filling added to the reservoir is recorded by the control means.

Figure 15 shows a flowchart 500 with the progressive steps of the process for cleaning a device for dispensing liquids as disclosed herein.

## Claims

1. Stirrer (102, 401), comprising a first stirring blade (104, 402) rotatable around an axis (107, 404), and a second stirring blade (105, 403) rotatable around the axis at a distance from the first stirring blade (402, 104), wherein the first and second stirring blades (104, 105, 402, 403) each extend substantially at right angles from the axis (107, 404) and wherein the stirrer comprises at least one connecting element (405, 406) arranged between the first and second stirring blades at a distance from the axis, **characterised in that** at least one of the stirring blades is provided with at least one protrusion (409, 410).

2. Stirrer (102, 401) as claimed in claim 1, wherein the first stirring blade comprises at least one protrusion between the connecting element and the axis and directed toward the second stirring blade (409, 410).

3. Stirrer (102, 401) as claimed in claim 1, wherein the connecting element extends between the tips of the first and second stirring blades for movement along a wall.

4. Stirrer (102, 401) as claimed in claim 1 or 2, wherein the connecting element extends in a plane with at least a directional component transversely of the direction of displacement of the connecting element during the rotation of the stirrer.

5. Stirrer (102, 401) as claimed in any of the foregoing claims, wherein the connecting element extends in a plane in which the axis of the stirrer lies.

6. Stirrer (102, 401) as claimed in any of the foregoing claims, wherein the whole stirrer takes a substantially flat form.

7. Stirrer as (102, 401) claimed in any of the foregoing claims, provided with coupling means (411) for coupling the stirrer to counter-coupling means of a drive.

8. Stirrer (102, 401) as claimed in claim 7, wherein the coupling means is adapted for coupling to the counter-coupling means (411) unlocked in axial direction of the axis and engaging in tangential direction of the axis.

9. Stirrer (102, 401) as claimed in any of the foregoing claims, wherein at least one stirring blade is manufactured from ABS.

10. Stirrer (102, 401) as claimed in any of the foregoing claims, wherein the outer end of the shaft remote from the coupling means comprises a pointed or bush form for supporting the shaft rotatably on a respective bush-shaped or pointed base.

11. Combination of a stirrer according to any of the preceding claims and a container for liquids, such as liquid food products, comprising:
- a receiving space for the liquid;
- a lid for closing the receiving space;
- a counter-coupling means received on a side of the lid facing toward the receiving space for the purpose of engaging the stirrer;
- a drive device for driving the counter-coupling means.

12. Combination as claimed in claim 11, wherein the drive is arranged in the lid.

13. Combination as claimed in claim 11 or 12, provided with a control unit for controlling the drive, wherein the control unit comprises:
- a stirring mode, in which the drive has a rotation speed within a first range, and
- a cleaning mode, in which the drive has a rotation speed within a second range,
wherein the second range is higher than the first range.

14. Combination as claimed in claim 13, wherein the control unit is adapted to alternate the rotation direction of the drive.

15. Method for operating a combination of a container for liquids and a stirrer, as claimed in any of the claims 11-14, comprising:
- driving the stirrer in a stirring mode with a rotation speed within a first range, and
- driving the stirrer in a cleaning mode with a rotation speed within a second range,
wherein the second range is higher than the first range.

## Patentansprüche

1. Umrührer (102, 401), umfassend ein erstes Rührblatt (104, 402), das um eine Achse (107, 404) drehbar ist, und ein zweites Rührblatt (105, 403), das um die Achse in einem Abstand von dem ersten Rührblatt (402, 104) drehbar ist, wobei sich das erste und das zweite Rührblatt (104, 105, 402, 403) jeweils im Wesentlichen in rechten Winkeln von der Achse (107, 404) erstrecken und wobei der Umrührer mindestens ein Verbindungselement (405, 406) umfasst, das zwischen dem ersten und dem zweiten Rührblatt in einem Abstand von der Achse angeordnet ist, **dadurch gekennzeichnet, dass** mindestens eines der Rührblätter mit mindestens einem Vorsprung (409, 410) bereitgestellt ist.

2. Umrührer (102, 401) nach Anspruch 1, wobei das erste Rührblatt mindestens einen Vorsprung zwischen dem Verbindungselement und der Achse umfasst und die Achse zum zweiten Rührblatt (409, 410) gerichtet ist.

3. Umrührer (102, 401) nach Anspruch 1, wobei sich das Verbindungselement zwischen den Spitzen des ersten und des zweiten Rührblatts zur Bewegung entlang einer Wand erstreckt.

4. Umrührer (102, 401) nach Anspruch 1 oder 2, wobei sich das Verbindungselement auf einer Ebene mit mindestens einer Richtungskomponente quer zur Richtung der Verschiebung des Verbindungselements während der Drehung des Umrührers erstreckt.

5. Umrührer (102, 401) nach einem der vorhergehenden Ansprüche, wobei sich das Verbindungselement in einer Ebene erstreckt, in der die Achse des Umrührers liegt.

6. Umrührer (102, 401) nach einem der vorhergehenden Ansprüche, wobei der gesamte Umrührer eine im Wesentlichen flache Form annimmt.

7. Umrührer (102, 401) nach einem der vorhergehenden Ansprüche, der mit einem Kopplungsmittel (411) zum Koppeln des Umrührers mit einem Gegenkopplungsmittel eines Antriebs bereitgestellt ist.

8. Umrührer (102, 401) nach Anspruch 7, wobei das Kopplungsmittel zum Koppeln mit dem Gegenkopplungsmittel (411) ausgelegt ist, das in axialer Richtung der Achse entriegelt wird und in tangentialer Richtung der Achse eingreift.

9. Umrührer (102, 401) nach einem der vorhergehenden Ansprüche, wobei mindestens ein Rührblatt aus ABS hergestellt ist.

10. Umrührer (102, 401) nach einem der vorhergehenden Ansprüche, wobei das äußere Ende der Welle entfernt von dem Kopplungsmittel eine spitze oder Gleitbuchsenform zum drehbaren Lagern der Welle auf einer zugehörigen gleitbuchsenförmigen oder spitzen Basis umfasst.

11. Kombination aus einem Umrührer nach einem der vorhergehenden Ansprüche und einem Flüssigkeitsbehälter, wie für flüssige Nahrungsmittel, umfassend:
- einen Aufnahmeraum für die Flüssigkeit;
- einen Deckel zum Schließen des Aufnahmeraums;
- ein Gegenkopplungsmittel, das an einer Seite des Deckels aufgenommen ist, das zum Aufnahmeraum zum Zwecke des Ineingriffbringens des Umrührers gerichtet ist;
- eine Antriebsvorrichtung zum Antreiben des Gegenkopplungsmittels.

12. Kombination nach Anspruch 11, wobei der Antrieb in dem Deckel angeordnet ist.

13. Kombination nach Anspruch 11 oder 12, die mit einer Steuereinheit zum Steuern des Antriebs bereitgestellt ist, wobei die Steuereinheit umfasst:
- einen Rührmodus, bei dem der Antrieb eine Drehzahl innerhalb eines ersten Bereichs aufweist, und
- einen Reinigungsmodus, bei dem der Antrieb eine Drehzahl innerhalb eines zweiten Bereichs aufweist, wobei der zweite Bereich höher als der erste Bereich ist.

14. Kombination nach Anspruch 13, wobei die Steuereinheit zum Verändern der Drehrichtung des Antriebs ausgelegt ist.

15. Verfahren zum Betreiben einer Kombination aus einem Behälter für Flüssigkeiten und einem Umrührer nach einem der Ansprüche 11 bis 14, umfassend:
- Antreiben des Umrührers in einem Rührmodus, bei dem eine Drehzahl innerhalb eines ersten Bereichs liegt, und
- Antreiben des Umrührers in einem Reinigungsmodus, bei dem eine Drehzahl innerhalb eines zweiten Bereichs liegt, wobei der zweite Bereich höher als der erste Bereich ist.

## Revendications

1. Agitateur (102, 401) comprenant une première pale d'agitation (104, 402) rotative autour d'un axe (107, 404), et une seconde pale d'agitation (105, 403) rotative autour de l'axe à une distance de la première pale d'agitation (402, 104), dans lequel les première et seconde pales d'agitation (104, 105, 402, 403) s'étendent chacune sensiblement à angles droits à partir de l'axe (107, 404), et dans lequel l'agitateur comprend au moins un élément de connexion (405, 406) qui est agencé entre les première et seconde pales d'agitation à une distance de l'axe, **caractérisé en ce qu'**au moins une des pales d'agitation comporte au moins une saillie (409, 410).

2. Agitateur (102, 401) selon la revendication 1, dans lequel la première pale d'agitation comporte au moins une saillie entre l'élément de connexion et l'axe qui est orientée en direction de la seconde pale d'agitation (409, 410).

3. Agitateur (102, 401) selon la revendication 1, dans lequel l'élément de connexion s'étend entre les pointes de la première et de la seconde pales d'agitation pour se déplacer le long d'une paroi.

4. Agitateur (102, 401) selon la revendication 1 ou 2, dans lequel l'élément de connexion s'étend dans un plan avec au moins une composante directionnelle transversalement à la direction de déplacement de l'élément de connexion pendant la rotation de l'agitateur.

5. Agitateur (102, 401) selon l'une quelconque des revendications précédentes, dans lequel l'élément de connexion s'étend dans un plan dans lequel l'axe de l'agitateur réside.

6. Agitateur (102, 401) selon l'une quelconque des revendications précédentes, dans lequel l'ensemble de l'agitateur présente une forme sensiblement plate.

7. Agitateur (102, 401) selon l'une quelconque des revendications précédentes, pourvu de moyens de couplage (411) pour coupler l'agitateur à des moyens de contre-couplage d'une commande.

8. Agitateur (102, 401) selon la revendication 7, dans lequel les moyens de couplage sont aptes à se coupler aux moyens de contre-couplage (411) de façon non verrouillée dans une direction axiale de l'axe et à s'engager dans une direction tangentielle de l'axe.

9. Agitateur (102, 401) selon l'une quelconque des revendications précédentes, dans lequel au moins une pale d'agitation est fabriquée à partir d'ABS.

10. Agitateur (102, 401) selon l'une quelconque des revendications précédentes, dans lequel l'extrémité extérieure de l'arbre distante des moyens de couplage présente une forme pointue ou de douille afin de supporter l'arbre de façon rotative sur une base pointue ou en forme de douille respective.

11. Combinaison d'un agitateur selon l'une quelconque des revendications précédentes et d'un récipient pour contenir des liquides, tels que des produits alimentaires liquides, comprenant:
- un espace de réception pour le liquide;
- un couvercle pour fermer l'espace de réception;
- des moyens de contre-couplage reçus sur un côté du couvercle orienté en direction de l'espace de réception dans le but d'engager l'agitateur; et
- un dispositif de commande pour actionner les moyens de contre-couplage.

12. Combinaison selon la revendication 11, dans laquelle la commande est agencée dans le couvercle.

13. Combinaison selon la revendication 11 ou 12, pourvue d'une unité de commande pour commander la commande, dans laquelle l'unité de commande comprend:
- un mode d'agitation, dans lequel la commande présente une vitesse de rotation comprise à l'intérieur d'une première plage; et
- un mode de nettoyage, dans lequel la commande présente une vitesse de rotation comprise à l'intérieur d'une seconde plage,
dans laquelle la seconde plage est plus élevée que la première plage.

14. Combinaison selon la revendication 13, dans laquelle l'unité de commande est apte à alterner le sens de rotation de la commande.

15. Procédé de commande d'une combinaison d'un récipient pour contenir des liquides et d'un agitateur selon l'une quelconque des revendications 11 à 14, comprenant les étapes suivantes:
- actionner l'agitateur dans un mode d'agitation avec une vitesse de rotation comprise à l'intérieur d'une première plage; et
- actionner l'agitateur dans un mode de nettoyage avec une vitesse de rotation comprise à l'intérieur d'une seconde plage,
dans lequel la seconde plage est plus élevée que la première plage.
